# EUROPEAN PATENT APPLICATION

(11) **EP 2 271 098 A1**
(43) Date of publication of application: **05.01.2011**
(21) Application number: 09733058.3
(22) Date of filing: 17.04.2009
(51) Int. Cl.: H04N 7/173, G06F 13/00

(54) **SERVER DEVICE, CONTENT DISTRIBUTION METHOD, AND PROGRAM**

(30) Priority: 18.04.2008 JP 2008109300
(71) Applicant: NEC Corporation, Minato-ku Tokyo 108-8001 (JP)
(72) Inventor: OZAWA, Kazunori, Tokyo 108-8001 (JP)
(74) Representative: Glawe, Delfs, Moll
(86) International application number: PCT/JP2009/057747
(87) International publication number: WO 2009/128528

(57) **Abstract**

For use when content includes at least one of video, audio, and speech, the present invention provides a server apparatus, a content distribution method, and a program that allow a moving picture stream, adapted to various terminals having different capability information, to be transferred via an IP network or a circuit switch network and allow a terminal to reproduce high-quality video, audio, and speech. A server apparatus (102) that transmits content to a terminal (103) via a network (105) includes a control/analysis unit (108) that receives and transmits information including information on capability of the terminal and a transcoder (109) that receives content including at least one of video, speech, and audio, receives information from the control/analysis unit (108), converts at least one of the codec, bit rate, resolution, and file format of the content, as necessary to make the content adapted to the capability of the terminal, and transmits the converted content.

## Description

### TECHNICAL FIELD

### [REFERENCE TO RELATED APPLICATIONS]

The present invention claims priority from Japanese Patent Application 2008-109300 (filed on April 18, 2008) the content of which is hereby incorporated in its entirety by reference into this specification.

The present invention relates to a server apparatus, and more particularly to a server apparatus, a content distribution method, and a program for converting and distributing content, which will be distributed to a terminal, according to the capability of the terminal.

### BACKGROUND ART

In recent years, ITU-T(International Telecommunication Union Telecommunication Standardization sector) Recommendation H.263 and MPEG(Moving-picture Experts Group)-4 internationally standardized by ISO/IEC(International Organization for Standardization/International Electro-technical Commission) are known as a video compression method for efficiently transmitting video signals at a low bit rate. In addition, H.264/MPEG-4 AVC(Advanced Video Coding) internationally standardized by ITU-T and ISO/IEC attracts attention as a method for transmitting video signals more efficiently than the video compression method described above. This contribute to the widespread use of multimedia distribution via an NGN(Next Generation Network) or a mobile network.

When content includes a moving picture signal, the setting of the moving picture codec which can be decoded by the terminal (hereinafter called capability information) must be notified to the media server at call connection time and, when this capability information is transferred via an IP network, IETF(Internet Engineering Task Force) RFC2327 SDP(Session Description Protocol) is available for use as the protocol. When transferred via a circuit switch network, the capability information on the terminal is transmitted to the server apparatus using the protocol stipulated by the ITU-T Recommendation H.245.

Patent Document 1 discloses a configuration in which a server analyzes a URL(Uniform Resource Locator) received from a client and directly transmits content, if data conversion instruction information is not included in the URL from the client, but, if data conversion instruction information is embedded in the URL from the client, converts the data according to the data conversion instruction information and transmits the converted data to the client. If the content format of the server differs from a data list receivable by the client, this system converts the data list and transmits the converted data list to the client to allow the conversion unit of the client to perform codec-conversion for the content.

Patent Document 2 discloses a configuration in which, when an advertisement is inserted into video content, the video content and the advertisement content are managed independently by a distribution side and the advertisement content is inserted into the video content selectively by the distribution side and an audience side.

Patent Document 3 discloses a network load management device that, when a network load has exceeded a predetermined limitation value, rejects a request to connect to the network and at the same time makes a reservation for the connection request, but, when the network load is maintained within the limitation value even if a communication device is connected, connects the communication devices, each of which has a connection request reservation, to the network in a predetermined order.

Patent Document 4 discloses a configuration in which, when a content request is received from a user terminal, a band reservation request is transmitted from a content server apparatus to a band management apparatus which judges if the request is acceptable and, if the request is acceptable, a band reservation setting request is transmitted both to a band control unit of the user-side edge apparatus and to a band control unit of the server-side edge device and, after the band reservation is completed, the content is transmitted from the content server to the user terminal device.

Patent Document 5 discloses a configuration in which a content creator inserts character data into content.

Patent Document 6 discloses a configuration of a mobile communication system that implements "network seamlessness" for roaming among heterogeneous networks and "content seamlessness" for conversion between heterogeneous codes or medium. In this system, a network control unit judges if information conversion is necessary for terminals, calls, flows, or sessions and, if it is judged that information conversion is necessary, manages media, coding methods, and coding speeds of before-conversion information and after-conversion information, and the information conversion device changes the medium of information transferred on the network (including conversion from speech to text and conversion from a moving picture to a still picture) and changes a transmission quality between the same medium to allow a communication environment to be switched automatically according to a user environment.

Patent Document 7 discloses a system in which a broadcast station side converts moving picture data and speech data, created for television broadcasting, to a file format distributable over the Internet and transmits the converted data to a gateway server and then the gateway server performs conversion processing (data conversion, compression processing) for the received data, converts it to a predetermined format and transmits the data to a mobile phone terminal for display thereon via a browser.

Patent Document 8 discloses a content conversion system in which XHTML Basic-format-converted information is converted to content for display on a mobile terminal, an image format and an image size of image data, downloaded from a web, are converted to be adapted to a mobile terminal, and the content that has been converted for use on the mobile terminal is divided into a size in accordance with a screen of the mobile terminal.

Patent Document 9 discloses a configuration in which a application gateway converts content, which is acquired from an origin server according to a content retrieval request received from a mobile terminal, by referencing parameters in profile information indicating performance and capability of a mobile terminal so that the performance and capability of the mobile terminal can be fully utilized. The conversion includes markup language (ML) conversion (SGML, HTML, XTML, etc.), character set conversion, and object conversion (file conversion).

Patent Document 10 discloses a configuration in which content data distributed from a content server is captured by an agent, a format of the content data is converted to be adapted to a user terminal, and the converted content data is transmitted to the user terminal.

Patent Document 11 discloses a configuration in which a broadcast system converts data to a file format reproducible on a mobile phone according to device information transmitted from the mobile phone and transmits the converted data to the mobile phone.

[Patent Document 1] Japanese Patent Kokai Publication No. JP-P2004-46789A
[Patent Document 2] Japanese Patent Kokai Publication No. JP-P2003-289521A
[Patent Document 3] Japanese Patent Kokai Publication No. JP-P2001-326658A
[Patent Document 4] Japanese Patent Kokai Publication No. JP-P2003-51846A
[Patent Document 5] Japanese Patent Kokai Publication No. JP-P2006-237663A
[Patent Document 6] Japanese Patent Kohyo Re-Publication No. WO02/015630
[Patent Document 7] Japanese Patent Kokai Publication No. JP-P2001-218273A
[Patent Document 8] Japanese Patent Kokai Publication No. JP-P2003-271508A
[Patent Document 9] Japanese Patent Kokai Publication No. JP-P2005-275534A
[Patent Document 10] Japanese Patent Kokai Publication No. JP-P2005-339149A
[Patent Document 11] Japanese Patent Kokai Publication No. JP-P2007-006148A

### DISCLOSURE OF THE INVENTION

### PROBLEMS TO BE SOLVED BY THE INVENTION

The following gives an analysis of the related technologies of the present invention.

When moving picture information on content to be distributed does not match capability information on a terminal to which the moving picture information is to be distributed, it becomes difficult for the terminal to decode the moving picture stream and therefore the problem is that the video image cannot be displayed, or is distorted, on the terminal.

When the moving picture information on content to be distributed does not match the bit rate or screen resolution of a terminal, the problem is that the image is distorted and the image quality is significantly degraded on the terminal.

Another problem is that, when the codec or the file format does not match between the moving picture information on content to be distributed and a terminal, the video cannot be reproduced on the terminal at all.

A still another problem is that, when the network traffic is high and congested on an IP network, P packets are sometimes lost on the network with the result that the media quality is degraded, for example, the image is distorted or the speech is interrupted.

Next, the following describes the difference between Patent Documents given above and the invention disclosed by the preset application.

Patent Document 1 discloses the conversion of content (for example, MPEG-4 video content, etc.) by the conversion unit on the client side, and this conversion is completely different from the invention disclosed by the present application described later. Patent Documents 2-5 disclose only a part of the technology related to the present application that will be described later.

The invention described in Patent Document 6, in which the medium is changed (for example, from a moving picture to a still picture) or the coding method or the transmission rate is changed, is completely different from the invention disclosed by the present application that will be described later (that is, for the content to be distributed, the information required to decode the content and the capability of a mobile terminal are compared and the content is transcoded for the required parameters).

The invention described in Patent Document 7, in which the gateway server side performs image processing, such as rendering that is too difficult for a CPU power on the mobile phone side to perform in real time, and then transmits the processed data to the mobile phone, is completely different from the invention disclosed by the present application that will be described later.

The invention described in Patent Document 8, in which the image format and the image size of image data downloaded from the web are converted for use on a mobile terminal, is completely different from the invention disclosed by the present application that will be described later.

The invention described in Patent Document 9, in which markup language(ML) conversion (SGML, HTML, XTML, and so on), character set conversion, or object conversion (file conversion) is performed, is completely different from the invention disclosed by the present application that will be described later.

The invention described in Patent Document 10, in which the format conversion is performed, and the invention described in Patent Document 11, in which the format of files is converted to the file format reproducible on a mobile phone, are completely different from the invention disclosed by the present application that will be described later.

Accordingly, it is an object of the present invention to provide a server apparatus, a content distribution method, and a program that allows a moving picture stream, which is compatible with various terminals having different capability information, to be transferred via an IP network or a circuit switch network, and allows high-quality video, audio, or speech to be reproduced on a terminal, when content includes at least one of video, audio, and speech.

In addition to achieving the object described above, it is also an object of the present invention to provide a server apparatus, a content distribution method, and a program that can monitor a state of a network for performing terminal connection control and network band management.

### MEANS TO SOLVE THE PROBLEMS

According to one aspect of the present invention, there is provided a server apparatus that transmits content to a terminal via a network, comprising:
a control unit that receives information, which includes capability on the terminal, from the terminal, and
acquires information including a codec, bit rate, resolution, and file format as information on decoding of content, which is received via a network and which includes at least one of video, speech, and audio, compares the acquired information with the capability of the terminal and judges whether or not conversion of the content is necessary; and
a conversion unit that, if it is judged that the conversion is necessary, converts at least one of the codec, bit rate, resolution, and file format of the content, generates content that matches the capability of the terminal, and transmits the generated content to the terminal.

According to another aspect of the present invention, there is provided a content distribution method performed by a server that transmits content to a terminal via a network, comprising the steps of:
receiving information, which includes capability on the terminal, from the terminal;
acquiring information including a codec, bit rate, resolution, and file format as information on decoding of content which is received via a network and which includes at least one of video, speech, and audio received via a network,
comparing the acquired information with the capability of the terminal to judge whether or not conversion of the content is necessary; and
if it is judged that the conversion is necessary, converting at least one of the codec, bit rate, resolution, and file format of the content, generating content that matches the capability of the terminal, and transmitting the generated content to the terminal.

According to still another aspect of the present invention, there is provided a computer program causing a server, which transmits content to a terminal via a network, to execute the processing including:
receiving information, which includes capability on the terminal, from the terminal;
acquiring information including a codec, bit rate, resolution, and file format as information on decoding of content which is received via a network and which includes at least one of video, speech, and audio received via a network, comparing the acquired information with the capability of the terminal to judge whether or not conversion of the content is necessary; and
if it is judged that the conversion is necessary, converting at least one of the codec, bit rate, resolution, and file format of the content, generating content that matches the capability of the terminal, and transmitting the generated content to the terminal.

### MERITORIOUS EFFECTS OF THE INVENTION

When content includes at least one of video, audio, and speech, the present invention allows a moving picture stream, adapted to various terminals having different capability information, to be transferred via an IP network or a circuit switch network and allows a terminal to reproduce high-quality video, audio, and speech. The present invention may also be used to perform terminal connection control through monitoring a traffic state of a network or to perform network band management.

### BRIEF DESCRIPTION OF THE DRAWINGS

FIG. 1 is a diagram showing the system configuration of a first exemplary embodiment of the present invention.
FIG. 2 is a diagram showing the configuration of a transcoder 109 shown in FIG. 1.
FIG. 3 is a diagram showing the system configuration of a second exemplary embodiment of the present invention.
FIG. 4 is a diagram showing the configuration of a transcoder 209 shown in FIG. 3.
FIG. 5 is a diagram showing the system configuration of a third exemplary embodiment of the present invention.
FIG. 6 is a diagram showing the configuration of a transcoder 309 shown in FIG. 5.
FIG. 7 is a diagram showing the system configuration of a fourth exemplary embodiment of the present invention.

### EXPLANATIONS OF SYMBOLS

- 101, 101A: Content server
- 102, 102A, 102B, 102C: Server device
- 103: Terminal
- 104, 105: Transmission line
- 107, 110, 120, 320: Transmission/reception unit
- 108: Control/analysis unit
- 109,209,309: Transcoder
- 201: Conversion control unit
- 202: Reception buffer
- 203: File reading unit
- 204,224: Transcoder unit
- 205,305: File writing unit
- 206: Switch unit
- 207: Transmission buffer
- 410: Monitor/control unit

### PREFERRED MODES FOR CARRYING OUT THE INVENTION

In one mode of the present invention, a server apparatus, which transmits content to a terminal (103) via a network (transmission line) (105), comprises a control/analysis unit (108) that receives information, which includes capability on the terminal, from the terminal (103) and (transmission line) (104), acquires information including a codec, bit rate, resolution, and file format as information on decoding of content which is received from a content server (101) via a network and which includes at least one of video, speech and audio, compares the acquired information with the capability of the terminal and judges whether or not conversion of the content is necessary; and a conversion unit (transcoder) (109) that, if the control/analysis unit (108) judges that the conversion is necessary, converts at least one of the codec, bit rate, resolution, and file format of the content, generates content that matches the capability of the terminal, and transmits the generated content to the terminal.

In another mode of the present invention, there is provided a conversion unit (209) that inserts at least one of another video, audio, and speech such as an advertisement, or combines another video, into an any position of the content to be transmitted and transmits the content.

In still another mode of the present invention, a conversion unit (309) is provided that inserts or superimposes characters at a predetermined time or in a predetermined position of the content to be transmitted and transmits the content.

In still another mode of the present invention, the is provided a monitor/control unit (410) that performs at least one of connection control for monitoring a traffic state of the network to control whether or not the terminal is allowed to be connected and network band management for satisfying at least one of a request from the terminal and a request from the content. The following describes the present invention with reference to the exemplary embodiments. Although the following describes an example in which a transcoder is configured in the server apparatus, that transcodes content including a moving picture as an example, the same configuration may also be used when the content includes audio or speech.

In one mode of a method according to the present invention, the following steps are included.

### <Step 1>

A server apparatus (102) that transmits content to a terminal (103) via a network (105) receives information including capability on the terminal (103).

### <Step 2>

The server apparatus (102) acquires information including a codec, bit rate, resolution, and file format as information on decoding of content which is received from a content server (101) via a network (104) and which includes at least one of video, speech, and audio, compares the acquired information with the capability of the terminal, and judges whether or not conversion of the content is necessary.

### <Step 3>

If it is judged that the conversion is necessary, the server apparatus (102) converts at least one of the codec, bit rate, resolution, and file format of the content.

### <Step 4>

The server apparatus (102) transmits the converted content to the terminal (103) via a network (105).

The present invention will be described below with reference to exemplary embodiments.

### <First exemplary embodiment>

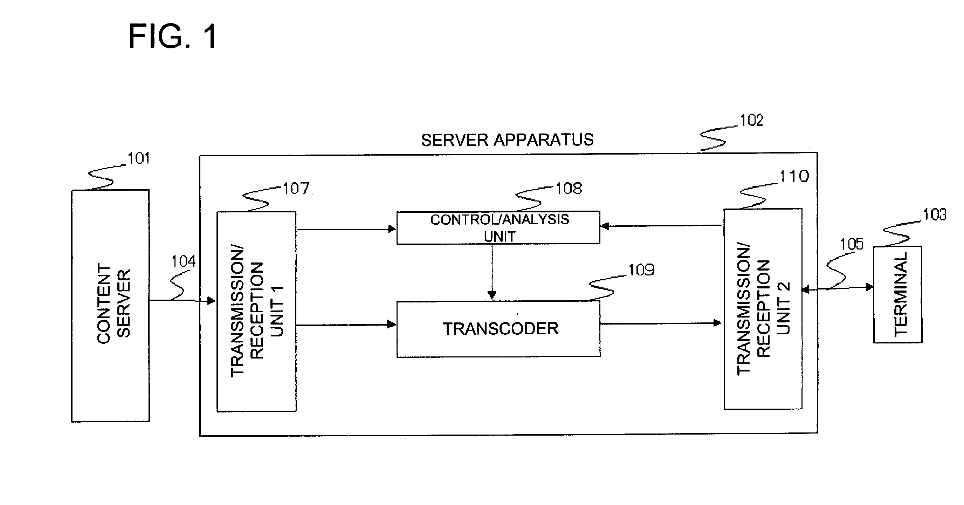

FIG. 1 is a diagram showing the configuration of a first exemplary embodiment of a server apparatus according to the present invention. In FIG. 1, a content server 101 accumulates therein compressed bit streams or files of content including at least one of video, audio, and speech.

A terminal 103 transmits a connection request to a server apparatus 102 via a transmission line 105. When transmitting the request, the terminal 103 also transmits capability information on the terminal to the server apparatus 102. To transmit the capability information, RFC 2326 RTCP(Real Time Control Protocol) or RFC 2327 SDP(Session Description Protocol), defined by IETF(Internet Engineering Task Force), may be used.

The transmission line 105 may be a CS(Circuit Switch) network or an IP(Internet Protocol) network. In the exemplary embodiments described below, it is assumed that the transmission line 105 is an IP network.

The following describes the server apparatus 102 with reference to FIG. 1. A transmission/reception unit 110 receives the capability information from the terminal 103 and outputs it to a control/analysis unit 108 that analyzes the capability information received from the terminal 103. A transmission/reception unit 107 receives content from the content server 101 via a transmission line 104.

When the content includes a moving picture, the content server 101 outputs decoding information (for example, DCI information: Decoder Configuration Information) and file information, required to decode the moving picture data of the selected content, to the transmission/reception unit 107 along with, or separately from, the moving picture stream or the moving picture file.

The transmission/reception unit 107 receives the decoding information and the file format and outputs them to the control/analysis unit 108.

The control/analysis unit 108 compares:
- capability information on the terminal 103 received from the transmission/reception unit 110 and
- codec, bit rate, screen resolution, and file format on the moving picture that are included in the DCI information and the file format on the moving picture data of the content received from the transmission/reception unit 107

If the comparison result indicates that at least one of the parameters does not match, the control/analysis unit 108 instructs a transcoder 109 to perform transcode processing.

In response to the instruction from the control/analysis unit 108, the transcoder 109 receives the moving picture data stream of the content from the transmission/reception unit 107 and performs conversion for one or more mismatching parameter. After that, the transcoder 109 outputs the converted output stream to the terminal 103 via the transmission line 105 through the transmission/reception unit 110. The units of the server apparatus 102 shown in FIG. 1 may of course have their functions and processing implemented by programs executed on the computer of the server apparatus 102.

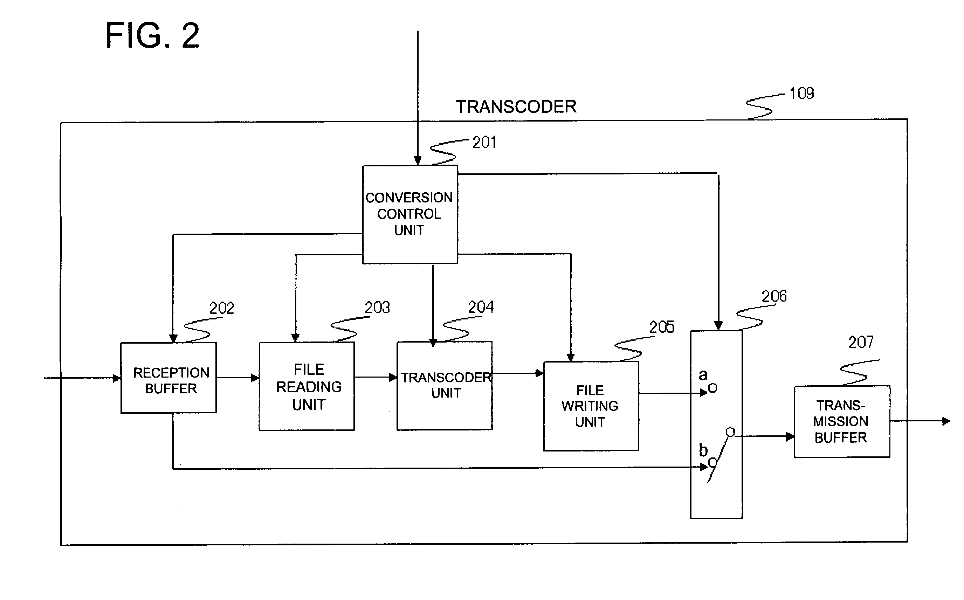

FIG. 2 is a block diagram showing an example of the configuration of the transcoder 109 shown in FIG. 1. Referring to FIG. 2, the transcoder 109 comprises a conversion control unit 201, a reception buffer 202, a file reading unit 203, a transcoder unit 204, a file writing unit 205, a switch unit 206, and a transmission buffer 207.

The reception buffer 202 receives the moving picture data stream or the moving picture file from the transmission/reception unit 107 shown in FIG. 1, by every prescribed size, and stores the received data once in the buffer.

The conversion control unit 201 receives conversion control information from the control/analysis unit 108 shown in FIG. 1 and determines if the transcoder processing is to be performed. For example, if all four types of parameters -- codec, bit rate, image resolution, and file format -- match, the conversion control unit 201 issues an instruction to the reception buffer 202 and the switch unit 206 to indicate that transcode processing will not be performed and causes the transcoder 109 to output the moving picture data stream, received by the reception buffer 202, directly to the transmission buffer 207. The transcoder 109 receives the moving picture data stream of the content from the transmission/reception unit 107 and outputs it to the transmission/reception unit 110 without performing the transcode processing, and the transmission/reception unit 110 outputs the moving picture data stream to the terminal 103 via the transmission line 105.

On the other hand, if at least one of four types of parameters codec, bit rate, screen resolution, and file format - does not match between the capability information on the terminal and the video, the conversion control unit 201 determines for which parameter the transcode processing is to be performed and outputs an instruction.

For example, an example of a mismatch in the codec, bit rate, and screen resolution is that the bit rate of the moving picture stream of content is MPEG-4, 128 kbps and the screen resolution is CIF(Common Intermediate Format) but those of the terminal are H.263, 64 kbps, and QCIF(Quarter Common Intermediate Format). In this case, the conversion control unit 201 issues an instruction to the reception buffer 202, file reading unit 203, transcoder unit 204, switch unit 206, and file writing unit 205.

The transcoder unit 204 receives the picture data stream or the file from the reception buffer 202 and stores it once in the buffer.

In the case of the file, the file reading unit 203 reads a moving picture stream, stored in the file format specified by the conversion control unit 201, and outputs it.

The transcoder unit 204 performs the transcode processing for the bit rate, screen resolution, and codec specified by the conversion control unit 201, and outputs the transcoded moving picture stream.

The file writing unit 205 writes the transcoded moving picture stream into a file with a file format specified by the conversion control unit 201, and the switch unit 206 is connected to side a to output the file to the transmission buffer 207, by every prescribed size. From the transmission buffer 207, the file is output, a predetermine size at a time.

If the reception buffer 202 receives, not a file, but a moving picture data stream, the processing of the file reading unit 203 and the file writing unit 205 are skipped.

In the processing described above, a known codec, such as H.263, MPEG-4, and H.264, may be used as the moving picture codec. A known file format, such as the 3GP file format and 3GP2 file format, may be used as the file format.

When content includes at least one of video, audio, and speech, the server apparatus in this exemplary embodiment allows a moving picture stream, compatible with various terminals having different capability information such as a codec, bit rate, screen resolution, and file format, to be transferred via an IP network or a circuit switch network.

### <Second exemplary embodiment>

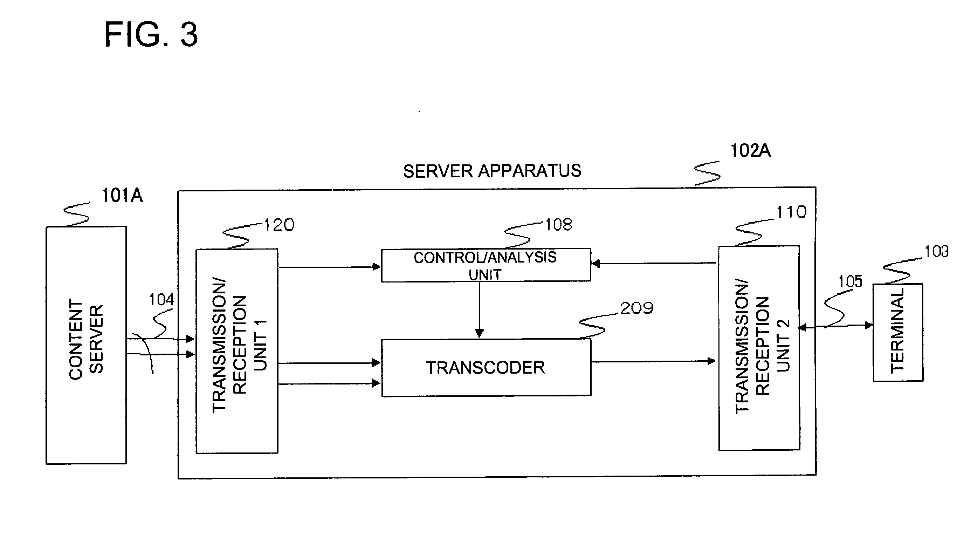

FIG. 3 is a diagram showing the configuration of a second exemplary embodiment of the present invention. In FIG. 3, the same reference numeral is given to the same component as that in FIG. 1, and the description of that component will be omitted because the same component performs the same operation as that in FIG. 1.

Referring to FIG. 3, a transmission/reception unit 120 of a server apparatus 102A in this exemplary embodiment receives not only moving picture data but also at least one of another video picture, such as an advertisement, audio, and speech, from a content server 101A. Although not limited thereto, an example will be described in this exemplary embodiment in which another video picture such as an advertisement is received. The transmission/reception unit 120 outputs another moving picture stream or another moving picture file to a transcoder 209.

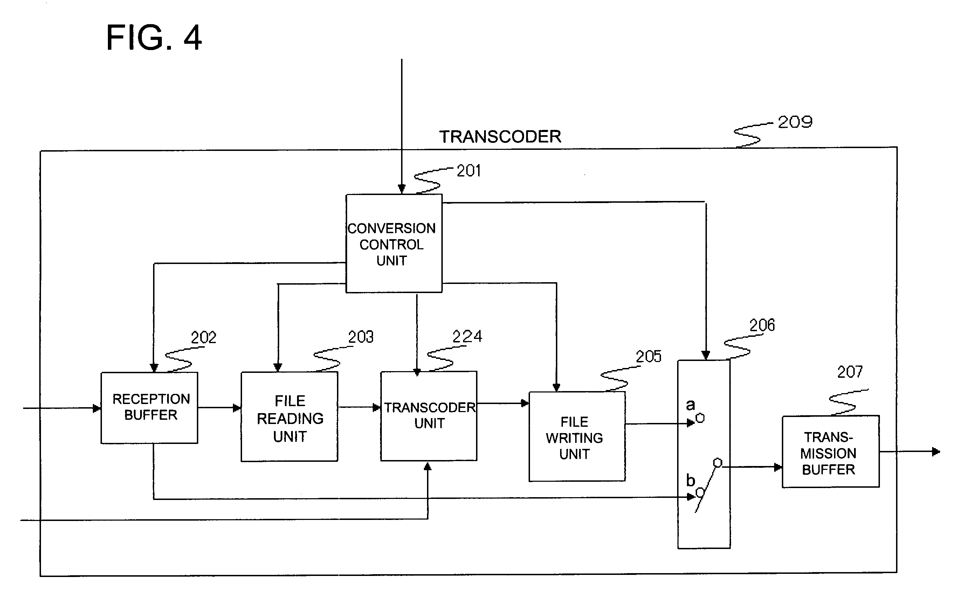

FIG. 4 is a block diagram showing the configuration of the transcoder 209. In FIG. 4, the same reference numeral is given to the same component as that in FIG. 2, and the description of that component will be omitted because the same component performs the same operation as that in FIG. 2.

In this exemplary embodiment, it is assumed that another video picture is received during the reception of a moving picture stream. In FIG. 4, a transcoder unit 224 receives a content moving picture stream and, at a predetermined time, another video picture stream, generates a moving picture stream that is a combination of the content video and another video picture, and outputs the generated moving picture stream to a transmission buffer 207 via a switch unit 206. In this exemplary embodiment, another video picture such as an advertisement may be inserted into, or combined with, a content video.

### <Third exemplary embodiment>

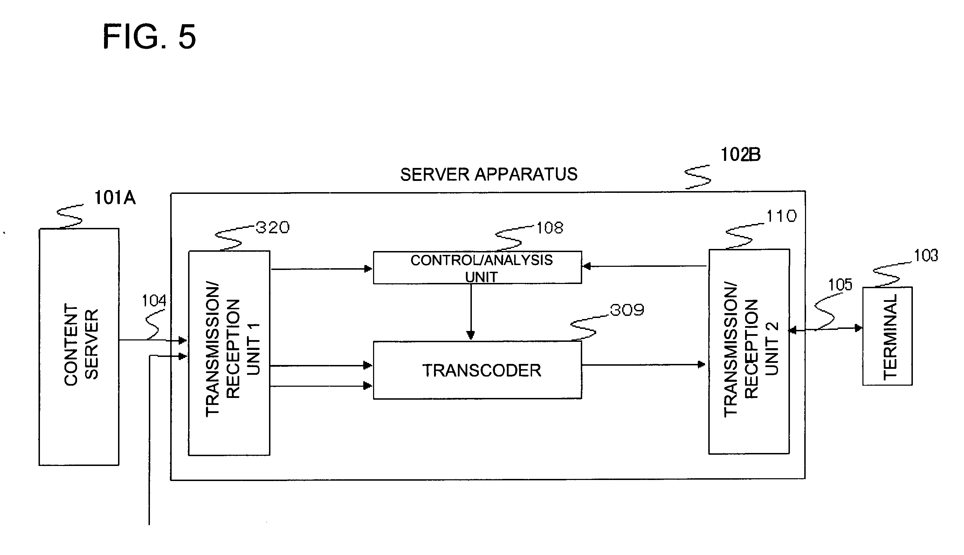

FIG. 5 is a diagram showing the configuration of a third exemplary embodiment of the present invention. In FIG. 5, the same reference numeral is given to the same component as that in FIG. 1, and the description of that component will be omitted because the same component performs the same operation as that in FIG. 1.

In FIG. 5, a transmission/reception unit 320 of a server apparatus 102B receives character information and outputs it to a transcoder 309.

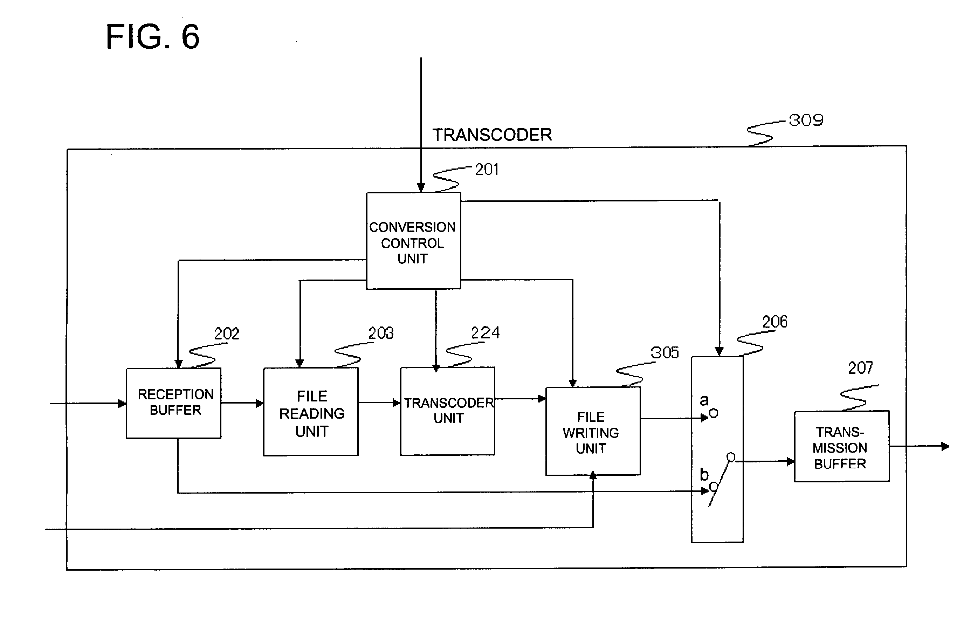

FIG. 6 is a diagram showing the configuration of the transcoder 309 in FIG. 5. In FIG. 6, the same reference numeral is given to the same component as that in FIG. 2, and the description of that component will be omitted because the same component performs the same operation as that in FIG. 2.

A file writing unit 305 receives character information from the transmission/reception unit 320 in FIG. 5 and writes a flag in a moving picture file for inserting the character information into a predetermined position.

According to this exemplary embodiment, characters may be inserted or superimposed at a predetermined time or in a predetermined position of content.

### <Fourth exemplary embodiment>

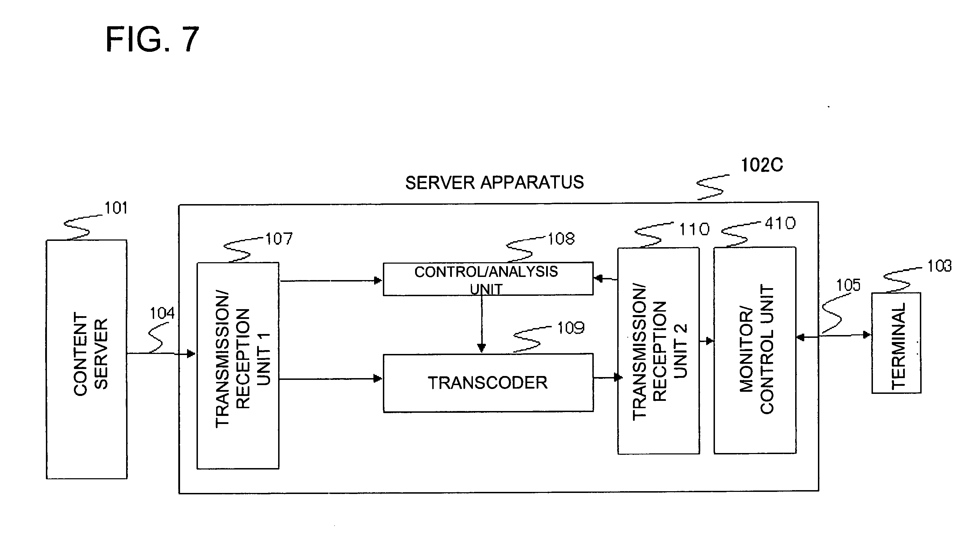

FIG. 7 is a diagram showing a fourth exemplary embodiment of the present invention. In FIG. 7, the same reference numeral is given to the same component as that in FIG. 1, and the description of that component will be omitted because the same component performs the same operation as that in FIG. 1. Referring to FIG. 7, a server apparatus 102C in this exemplary embodiment is similar to the server apparatus 102 in FIG. 1 except that a monitor/control unit 410 is added.

The monitor/control unit 410 performs at least one of the following two: one is connection control in which the monitor/control unit 410 monitors a traffic state of a network (transmission line) 105 and, if the traffic is congested, rejects the connection even if a connection request is received from a terminal 103 and the other is band management in which the monitor/control unit 410 manages the bandwidth and QoS(Quality of Service) of content, which will be distributed to the terminal considering the network bandwidth or the traffic state, when a QoS request or a bandwidth request, is issued from the terminal 103 using SDP(Session Description Protocol) or RTSP(Real Time Streaming Protocol).

According to this exemplary embodiment, the traffic state of a network is monitored to control whether or not a terminal may be connected or the network band is managed to satisfy one of a request from the terminal or a request from the content.

Although the exemplary embodiments have been described above individually, it is of course possible in the present invention to combine the exemplary embodiments.

The disclosures of Patent Documents given above are hereby incorporated by reference into this specification. The exemplary embodiments and the examples may be changed and adjusted in the scope of the entire disclosure (including claims) of the present invention and based on the basic technological concept. In the scope of the claims of the present invention, various disclosed elements may be combined and selected in a variety of ways. That is, it is to be understood that the present invention includes various modifications and changes that may be made by those skilled in the art according to the entire disclosure of the claims and the technological concept.

The present exemplary embodiments provide the following configurations, though not limited thereto.

### [Supplementary note 1]

A server apparatus that transmits content to a terminal via a network, comprising:
a control unit that receives information, which includes capability on the terminal, from the terminal, and
acquires information including a codec, bit rate, resolution, and file format as information on decoding of content which is received via a network and which includes at least one of video, speech, and audio, compares the acquired information with the capability of the terminal, and judges whether or not conversion of the content is necessary; and
a conversion unit that, if it is judged that the conversion is necessary, converts at least one of the codec, bit rate, resolution, and file format of the content, generates content that matches the capability of the terminal, and transmits the generated content to the terminal.

### [Supplementary note 2]

The server apparatus as described in supplementary note 1, wherein the control unit comprises
a control/analysis unit that receives the information, which includes the capability of the terminal transmitted from the terminal, and analyzes the received information,
acquires the information on a codec, bit rate, resolution, and file format from the decoding information on content which is received via a network and which includes at least one of video, speech, and audio, and a file format received in conjunction with or separately from the content, and compares the acquired information with the capacity of the terminal, and outputs a conversion instruction to the conversion unit if at least one of a codec, bit rate, resolution, and file format on the content does not match the capability of the terminal, and wherein the conversion unit comprises
a transcoder unit that, in response to a conversion instruction from the control/analysis unit, performs transcode processing of the content for any of the codec, bit rate, resolution, and file format of the content that does not match the capability of the terminal, and the content output from the transcoder unit is transmitted to the terminal via a transmission line.

### [Supplementary note 3]

The server apparatus as described in supplementary note 2, wherein the transcoder unit comprises a reception buffer that receives, and temporarily accumulates therein, a moving picture data stream of the content; and
a conversion control unit that receives conversion control information from the control/analysis unit and outputs an instruction indicating whether or not transcode processing is to be performed, wherein
if the capability information on the terminal matches all parameters of codec, bit rate, and screen resolution on a video, the conversion control unit outputs an instruction indicating that transcoder processing will not be performed and the moving picture data from the reception buffer is transmitted from a transmission/reception unit of the transcoder unit directly to the terminal via a network transmission line,
if the capability information on the terminal does not match at least one of the parameters of codec, bit rate, and screen resolution on the video, the conversion control unit determines for which parameter the transcoder processing is to be performed and outputs an instruction, and
the transcoder unit receives the moving picture data stream from the reception buffer, performs the transcode processing for parameters corresponding to the bit rate, screen resolution, or codec specified by the conversion control unit, and outputs the transcoded parameters,
the transcoder unit further comprising:
a switch unit that selects one of the moving picture data stream received from the reception buffer and the operation data stream transcoded by the transcoder unit based on an instruction from the conversion control unit and outputs the selected moving picture data stream; and
a transmission buffer that receives the output from the switch unit and outputs the received output by every prescribed size.

### [Supplementary note 4]

The server apparatus as described in supplementary note 3, further comprising:
a file reading unit that reads and outputs a moving picture stream, stored in a file format specified by the conversion control unit, from the reception buffer when the moving picture stream is accumulated in the reception buffer as a file, the transcoder unit transcoding the moving picture stream, read by the file reading unit, based on the instruction from the conversion control unit, and;
a file writing unit that writes the moving picture stream, transcoded by the transcoder unit, into a file in a file format specified by the conversion control unit, the switch unit selecting one of the output of the file writing unit and the output of the reception buffer based on the instruction from the conversion control unit and outputting the selected output to the transmission buffer by every prescribed size.

### [Supplementary note 5]

The server apparatus as described in any one of supplementary notes 1-4 wherein the conversion unit inserts at least one of another video, audio, and speech, or combines another video, into a desired position of the content to be transmitted and transmits the content.

### [Supplementary note 6]

The server apparatus as described in any one of supplementary note 5, wherein at least one of the another video, audio, and speech includes an advertisement.

### [Supplementary note 7]

The server apparatus as described in any one of supplementary notes 1-6, wherein the conversion unit inserts or superimposes characters at a predetermined time or in a predetermined position of the content to be transmitted and transmits the content.

### [Supplementary note 8]

The server apparatus as described in any one of supplementary notes 1-7, further comprising:
a monitor/control unit that performs at least one of
connection control for monitoring a traffic state of the network to control whether or not the terminal is allowed to be connected and
network band management for satisfying at least one of a request from the terminal and a request from the content.

### [Supplementary note 9]

A content transmission system comprising:
the server apparatus as described in any one of supplementary notes 1-8;
a content server that supplies content to the server apparatus; and
the terminal connected to the server apparatus via a network.

### [Supplementary note 10]

A content distribution method performed by a server that transmits content to a terminal via a network, comprising the steps of:
receiving information, which includes capability on the terminal, from the terminal;
acquiring information including a codec, bit rate, resolution, and file format as information on decoding of content which is received via a network and which includes at least one of video, speech, and audio,
comparing the acquired information with the capability of the terminal to judge whether or not conversion of the content is necessary; and
if it is judged that the conversion is necessary, converting at least one of the codec, bit rate, resolution, and file format of the content, generating content that matches the capability of the terminal and transmitting the generated content to the terminal.

### [Supplementary note 11]

The content distribution method as described in supplementary note 10, further comprising the steps of:
inserting at least one of another video, audio, and speech, or combining another video, into a desired position of the content to be transmitted; and
transmitting the content.

### [Supplementary note 12]

The content distribution method as described in supplementary note 10 or 11, further comprising the steps of:
inserting or superimposing characters at a predetermined time, or in a predetermined position, of the content to be transmitted and
transmitting the content.

### [Supplementary note 13]

The content distribution method as described in any one of supplementary notes 10-12, further comprising the step of:
performing at least one of
connection control for monitoring a traffic state of the network to control whether or not the terminal is allowed to be connected and
network band management for satisfying at least one of a request from the terminal and a request from the content.

### [Supplementary note 14]

A program causing a server, which transmits content to a terminal via a network, to execute the processing comprising:
receiving information, which includes capability on the terminal, from the terminal;
acquiring information including a codec, bit rate, resolution, and file format as information on decoding of content which is received via a network and which includes at least one of video, speech, and audio,
comparing the acquired information with the capability of the terminal, and judging whether or not conversion of the content is necessary; and
if it is judged that the conversion is necessary, converting at least one of the codec, bit rate, resolution, and file format of the content, generating content that matches the capability of the terminal, and transmitting the generated content to the terminal.

### [Supplementary note 15]

The program as described in supplementary note 14, further causing the server to execute the processing comprising:
inserting at least one of another video, audio, and speech, or combining another video, into a desired position of the content to be transmitted; and
transmitting the content.

### [Supplementary note 16]

The program as described in any one of supplementary note 14 or 15, further causing the server to execute the processing comprising:
inserting or superimposing characters at a predetermined time, or in a predetermined position, of the content to be transmitted and
transmitting the content.

### [Supplementary note 17]

The program as described in any one of supplementary notes 14-16, further causing the server to execute the processing comprising:
performing at least one of
connection control for monitoring a traffic state of the network to control whether or not the terminal is allowed to be connected and
network band management for satisfying at least one of a request from the terminal and a request from the content.

## Claims

1. A server apparatus that transmits content to a terminal via a network, comprising:
a control unit that receives from the terminal, information, which includes capability on the terminal, acquires information including a codec, bit rate, resolution, and file format, as information on decoding of content which is received via a network and which includes at least one of video, speech, and audio, compare the acquired information with the capability of the terminal and judges whether or not conversion of the content is necessary; and
a conversion unit that, if it is judged that the conversion is necessary, converts at least one of the codec, bit rate, resolution, and file format of the content, generates content that matches the capability of the terminal, and transmits the generated content to the terminal.

2. The server apparatus according to claim 1, wherein the control unit comprises:
a control/analysis unit that receives the information transmitted from the terminal, the information including the capability of the terminal,
analyzes the received information, acquires information on a codec, bit rate, resolution, and file format, from the decoding information on the content and the file format received in conjunction with or separately from the content received via a network and including at least one of video, speech, and audio,
compares the acquired information with the capacity of the terminal, and
outputs a conversion instruction to the conversion unit if at least one of a codec, bit rate, resolution, and file format on the content does not match the capability of the terminal, and wherein
the conversion unit comprises
a transcoder unit that, in response to the conversion instruction output from the control/analysis unit, performs transcode processing of the content, for any of the codec, bit rate, resolution, and file format of the content that does not match the capability of the terminal, the content output from the transcoder unit being transmitted to the terminal via a transmission line.

3. The server apparatus according to claim 2, wherein the transcoder unit comprises:
a reception buffer that receives, and temporarily accumulates therein, a moving picture data stream of the content; and
a conversion control unit that receives conversion control information from the control/analysis unit and outputs an instruction indicating whether or not transcode processing is to be performed, wherein
if the capability information on the terminal matches all parameters of codec, bit rate, and screen resolution on a video, the conversion control unit outputs an instruction indicating that transcoder processing will not be performed and the moving picture data from the reception buffer is transmitted from a transmission/reception unit of the transcoder unit directly to the terminal via a network transmission line, and
if the capability information on the terminal does not match at least one of the parameters of codec, bit rate, and screen resolution on the video, the conversion control unit determines for which parameter the transcoder processing is to be performed and outputs an instruction, and wherein
the transcoder unit receives the moving picture data stream from the reception buffer, performs the transcode processing for parameters corresponding to the bit rate, screen resolution, or codec specified by the conversion control unit, and outputs the transcoded parameters,
the transcoder unit further comprising:
a switch unit that selects one of the moving picture data stream received from the reception buffer and the operation data stream transcoded by the transcoder unit based on an instruction from the conversion control unit and outputs the selected moving picture data stream; and
a transmission buffer that receives the output from the switch unit and outputs the received output by every prescribed size.

4. The server apparatus according to claim 3, further comprising:
a file reading unit that reads and outputs a moving picture stream, stored in a file format specified by the conversion control unit, from the reception buffer when the moving picture stream is accumulated in the reception buffer as a file, the transcoder unit transcoding the moving picture stream, read by the file reading unit, based on the instruction from the conversion control unit, and;
a file writing unit that writes the moving picture stream, transcoded by the transcoder unit, into a file in a file format specified by the conversion control unit, the switch unit selecting one of the output of the file writing unit and the output of the reception buffer based on the instruction from the conversion control unit and outputting the selected output to the transmission buffer, by every prescribed size.

5. The server apparatus according to any one of claims 1 to 4, wherein the conversion unit inserts at least one of another video, audio, and speech, or combines another video, into a desired position of the content to be transmitted and transmits the content.

6. The server apparatus according to claim 5, wherein at least one of the another video, audio, and speech includes an advertisement.

7. The server apparatus according to any one of claims 1 to 6, wherein the conversion unit inserts or superimposes characters at a predetermined time or in a predetermined position of the content to be transmitted and transmits the content.

8. The server apparatus according to any one of claims 1 to 7, further comprising:
a monitor/control unit that performs at least one of
connection control for monitoring a traffic state of the network to control whether or not the terminal is allowed to be connected to the server apparatus, and
network band management for satisfying at least one of a request from the terminal and a request from the content.

9. A content transmission system comprising:
the server apparatus according to any one of claims 1 to 8;
a content server that supplies content to the server apparatus; and
the terminal connected to the server apparatus via a network.

10. A content distribution method performed by a server that transmits content to a terminal via a network, comprising the steps of:
receiving information which includes capability on the terminal, from the terminal;
acquiring information including a codec, bit rate, resolution, and file format as information on decoding of content which is received via a network and which includes at least one of video, speech, and audio;
comparing the acquired information with the capability of the terminal to judge whether or not conversion of the content is necessary; and
if it is judged that the conversion is necessary, converting at least one of the codec, bit rate, resolution, and file format of the content to generate content that matches the capability of the terminal and transmitting the generated content to the terminal.

11. The content distribution method according to claim 10, further comprising the steps of:
inserting at least one of another video, audio, and speech, or combining another video, into a desired position of the content to be transmitted; and
transmitting the content.

12. The content distribution method according to claim 10 or 11, further comprising the steps of:
inserting or superimposing characters at a predetermined time, or in a predetermined position, in the content to be transmitted and
transmitting the content.

13. The content distribution method according to any one of claims 10 to 12, further comprising the step of:
performing at least one of
connection control for monitoring a traffic state of the network to control whether or not the terminal is allowed to be connected to the server; and
network band management for satisfying at least one of a request from the terminal and a request from the content.

14. A program causing a server, which transmits content to a terminal via a network, to execute the processing comprising:
receiving information, which includes capability on the terminal, from the terminal;
acquiring information including a codec, bit rate, resolution, and file format as information on decoding of content which is received via a network and which includes at least one of video, speech, and audio,
comparing the acquired information with the capability of the terminal to judge whether or not conversion of the content is necessary; and
if it is judged that the conversion is necessary, converting at least one of the codec, bit rate, resolution, and file format of the content to generate content that matches the capability of the terminal, and transmitting the generated content to the terminal.

15. The program according to claim 14, further causing the server to execute the processing comprising:
inserting at least one of another video, audio, and speech, or combining another video, into a desired position of the content to be transmitted; and
transmitting the content.

16. The program according to claim 14 or 15, further causing the server to execute the processing comprising:
inserting or superimposing characters at a predetermined time, or in a predetermined position, in the content to be transmitted and
transmitting the content.

17. The program according to any one of claims 14 to 16, further causing the server to execute the processing comprising:
performing at least one of
connection control for monitoring a traffic state of the network to control whether or not the terminal is allowed to be connected to the server; and
network band management for satisfying at least one of a request from the terminal and a request from the content.
